# EUROPEAN PATENT APPLICATION

(11) **EP 2 772 850 A1**
(43) Date of publication of application: **03.09.2014**
(21) Application number: 14157136.4
(22) Date of filing: 28.02.2014
(51) Int. Cl.: G06F 9/44, G06F 17/30, G06F 9/445

(54) **Apparatus and method for manufacturing web widget**

(30) Priority: 28.02.2013 KR 20130021938
(71) Applicant: Samsung Electronics Co., Ltd., Suwon-si Gyeonggi-do 443-742 (KR)
(72) Inventor: Kim, Young-Ha, Gyeonggi-do 443-742 (KR); Park, Han-Seong, Gyeonggi-do 443-742 (KR); Kim, Jung-Hyun, Gyeonggi-do 443-742 (KR); Lee, Nam-Geol, Gyeonggi-do 443-742 (KR)
(74) Representative: Nederlandsch Octrooibureau

(57) **Abstract**

An apparatus and a method for manufacturing a web widget are provided. The method includes a web widget manufacturing tool for manufacturing the web widget is provided to a content provider's device, web widget generation information used for manufacturing the web widget is received from the content provider's device, an installation file for the web widget is generated based on the web widget generation information, and the installation file for the generated web widget is transferred to the content provider's device, which makes it possible to easily and rapidly develop the web widget without a separate developer or planner or use of a complicated client development tool.

## Description

### BACKGROUND OF THE INVENTION

### 1. Field of the Invention:

The present invention relates to an apparatus and a method for manufacturing a web widget. More particularly, the present invention relates to an apparatus and a method in which a web site type of a web widget manufacturing tool is provided to a content provider's device and a web widget is manufactured by using information input through the web widget manufacturing tool.

### 2. Description of the Related Art:

In general, a portable terminal has been widely used on the basis of mobility. The portable terminal supports various user functions as well as a mobile communication function, and users may use the above-described various functions by using the portable terminal.

The portable terminal provides various applications, and such applications as described above include a native application and a web application. The native application refers to an application configured such that the portable terminal downloads data from a content provider server providing various applications, processes the downloaded data, and displays the processed data on a screen. The web application refers to an application configured such that the portable terminal displays web page data, which is input from the content provider server, on the screen as it is. In recent years, a user interface form of a widget, by which the user is capable of accessing the content provided in the application without separate execution of the application, such as a clock widget, a calendar widget, a memo pad widget, a search widget, a map widget, a news widget, and a real-time camera widget is manufactured and provided to the user.

The content provider separately employs application planners and developers in order to make services, which the content provider provides, into the widget, and the employed planners and developers complete the widget after several days or months of development and verification. The widget completed as described above is transferred to a widget provision server which provides the application to the user, and the widget stored in the widget provision server is provided to the user through procedures of authentication and verification.

As described above, the content provider employs the planners and developers to manufacture the widget. The widget is completed after a lengthy process including the development and the verification of the widget. The completed widget is provided to the user through the authentication and the verification procedures in the widget provision server.

However, it is difficult to reuse the web service which the content provider already retained. Since a native widget needs separate planning, design, and development, the content provider has a burden of separately developing and managing the web service and a widget service. Although the content provider is capable of using the web application in order to reuse the web service, such an application form of service has lower accessibility as compared with a widget form of service.

Furthermore, although a server and an Application Program Interface (API) which are separate from the web service are constructed and managed so that the widget service is performed, when the number of servers being managed is two or more, a burden of management and administration, and a difficulty of synchronizing two services increases.

In addition, since the native widget is influenced by resolution of a device screen or characteristics of a launcher, while developing the widget, compatibility for target devices in which the widget is installed must be identified, and an increased amount of time and cost is taken to access the compatibility.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for manufacturing a web widget capable of reusing a web service of a content provider.

In accordance with an aspect of the present invention, an apparatus for manufacturing a web widget is provided. The apparatus includes a web widget manufacturing unit which provides a web widget manufacturing tool for manufacturing the web widget to a content provider's device, and receives web widget generation information used for manufacturing the web widget from the content provider's device, and a web widget installation file generation unit which receives the web widget generation information from the web widget manufacturing unit, and generates an installation file for the web widget based on the web widget generation information, wherein the web widget manufacturing unit transfers the installation file for the generated web widget to the content provider's device. The apparatus can be implemented as a web widget manufacturing server. The invention further provides a computer program product comprising computer instructions which, when executed on a processor of an apparatus such as a web widget manufacturing server, cause said apparatus to behave as described above.

In accordance with another aspect of the present invention, a method of manufacturing a web widget is provided. The method includes providing a web widget manufacturing tool for manufacturing the web widget to a content provider's device, receiving web widget generation information used for manufacturing the web widget from the content provider's device, generating an installation file for the web widget based on the web widget generation information, and transferring the installation file for the generated web widget to the content provider's device.

Other aspects, advantages, and salient features of the invention will become apparent to those skilled in the art from the attached claims and from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram illustrating a structure of a web widget manufacturing system according to an exemplary embodiment of the present invention;
FIG. 2 is a block diagram illustrating a structure of a web widget manufacturing server device according to an exemplary embodiment of the present invention;
FIG. 3 is a flowchart illustrating a process in which a web widget manufacturing server device manufactures a web widget according to an exemplary embodiment of the present invention; and
FIGS. 4, 5, 6, 7, 8A to 8E, 9, and 10 illustrate examples of a web page type of web widget manufacturing tool for manufacturing a web widget according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Although the terms including an ordinal number such as first, second, etc. can be used for describing various elements, the elements are not restricted by the terms. The terms are only used to distinguish one element from another element. For example, a first element could be termed a second element, and similarly, a second element could be also termed a first element without departing from the scope of the present invention. The terms used in the present application are only used to describe specific embodiments, and are not intended to limit the present invention. Singular forms are intended to include plural forms unless the context clearly indicates otherwise.

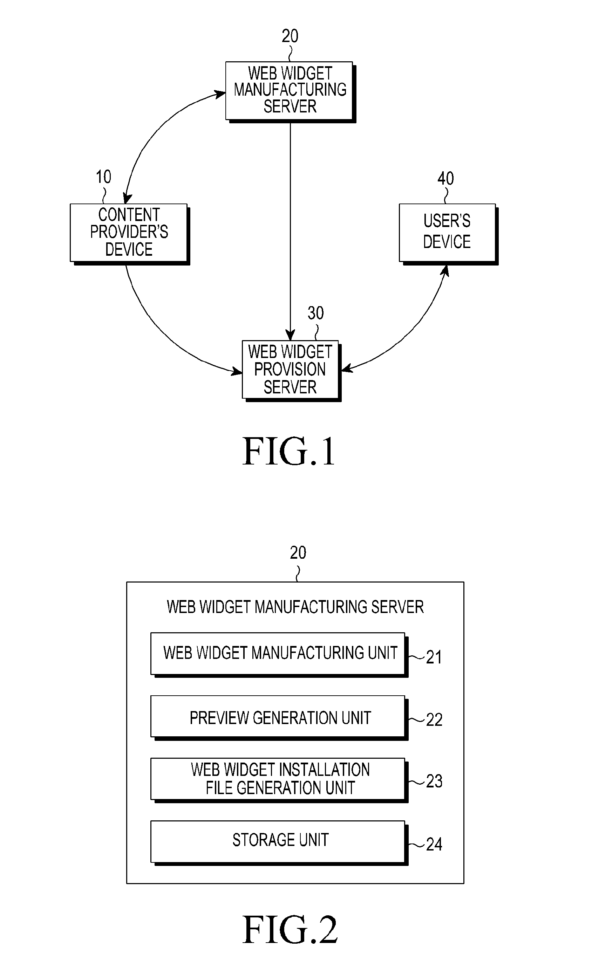

FIG. 1 is a block diagram illustrating a structure of a web widget manufacturing system according to an exemplary embodiment of the present invention.

The web widget manufacturing system of the present technique includes a content provider's device 10, a web widget manufacturing server 20, a web widget provision server 30, and a user's device 40. Here, a web widget refers to a widget for outputting content data of a web browser in an entire frame area of a common widget. As the skilled person will know, the term widget can refer to an application, in particular an application with a visual presence on a graphical user interface of a device, for example shown as an (animated) icon or image on a desktop or workspace area of the display. With the term "frame" an area on a display is indicated. Depending on the context, this can be an area of the display that is reserved for a specific purpose, e.g. to display a preview image or another type of content.

The content provider's device 10 receives a web widget manufacturing tool provided for manufacturing the web widget from the web widget manufacturing server, and transfers the input web widget generation information to the web widget manufacturing server 20 by using the received web widget manufacturing tool.

The web widget manufacturing server 20 transfers the web widget manufacturing tool provided for manufacturing the web widget to the content provider's device 10. Moreover, the web widget manufacturing server 20 generates a web widget installation file by using the web widget generation information received from the content provider's device, and transfers the generated web widget installation file to the content provider's device or to the web widget provision server 30. The phrases "receiving a tool" or "transferring a tool" does not necessarily mean transferring a physical object to the content provider's device. The skilled person will understand that it can refer to the act of providing a (graphical) user interface of the web widget manufacturing tool to the content provider's device. This user interface can be rendered on the content provider's device (e.g. as a web page) or alternatively it can be rendered on a server and transmitted to the content provider's device.

The web widget provision server 30 transfers the received web widget installation file to the user's device 40.

The user's device 40 installs the received web widget installation file to output the web widget on a screen.

FIG. 2 is a block diagram illustrating a structure of a web widget manufacturing server device according to an exemplary embodiment of the present invention.

The web widget manufacturing server 20 of the present technique includes a web widget manufacturing unit 21, a preview generation unit 22, a web widget installation file generation unit 23, and a storage unit 24. Such a web widget manufacturing server 20 as described above is formed of devices.

The web widget manufacturing unit 21 provides the web widget manufacturing tool to the content provider's device in order to acquire information used for generating the web widget, and generates the web widget by using the web widget generation information received from the content provider's device.

Here, the web widget generation information includes web widget frame configuration information, web widget setup information, web widget additional information, and web widget content configuration information.

The web widget frame configuration information includes a type of device on which the web widget is desired to be installed, a frame size of the web widget, information for setting a variation of the frame size, a web widget name, information for setting display of a status bar of the web widget, a logo image displayed on the status bar of the web widget, and link information corresponding to the logo image.

The web widget setup information includes information for setting a web page renewal request for the web widget, and information for setting storage of cache data of the web widget.

The web widget additional information includes an icon for the web widget, and a screenshot for the web widget.

The web widget content configuration information includes an address for a content output in a web widget frame, setup information for a content display area, and information for setting an effect in converting a page.

The web widget manufacturing tool which the web widget manufacturing unit 21 provides is configured in a web page form, and includes an input page for inputting the web widget frame configuration information, the web widget setup information, the web widget additional information, and the web widget content configuration information. Furthermore, the web widget manufacturing tools may be configured to display a web widget preview screen for previewing a form of the web widget in which each of the information is reflected. In addition, the web widget manufacturing tool may be configured to display a preview screen for content data output in the web widget frame.

In more detail, the web widget manufacturing unit 21 provides the web page type of web widget generation tool, which is manufactured in advance in order to receive the web widget generation information, to the content provider's device 10, and the content provider's device 10 receiving the web widget generation tool displays the web page type of web widget generation tool on the screen. When the web widget generation information including the web widget frame setup information for configuring the frame of the web widget, the web widget content configuration information for configuring a web widget content, the web widget setup information, and the web widget additional information is input by a content manufacturer by using the web widget generation tool displayed on the screen, the content provider's device 10 transfers the input web widget generation information to the web widget manufacturing unit 21.

For example, when an input for setting a content area output in the web widget frame is received, the web widget manufacturing unit 21 receives content preview data, which may be output in the web widget frame, from the preview generation unit 22, and transfers the content preview data to the content provider's device 10. Thereafter, when a selection input for the content area which is desired to be output in the web widget frame is received from the content provider's device 10, the web widget manufacturing unit 21 may manufacture the web widget such that the content data corresponding to the selected content area is output in the web widget frame. Here, the content data includes a web page configured to be output in the web widget frame.

The preview generation unit 22 of the present technique generates a content preview data which may be displayed on the web widget, and transfers the content preview data to the web widget manufacturing unit 21.

The web widget installation file generation unit 23 generates the web widget installation file which may be installed in a device for the web widget generated in the web widget manufacture unit 21.

The storage unit 24 stores the web widget generation information received from the content provider's device 10.

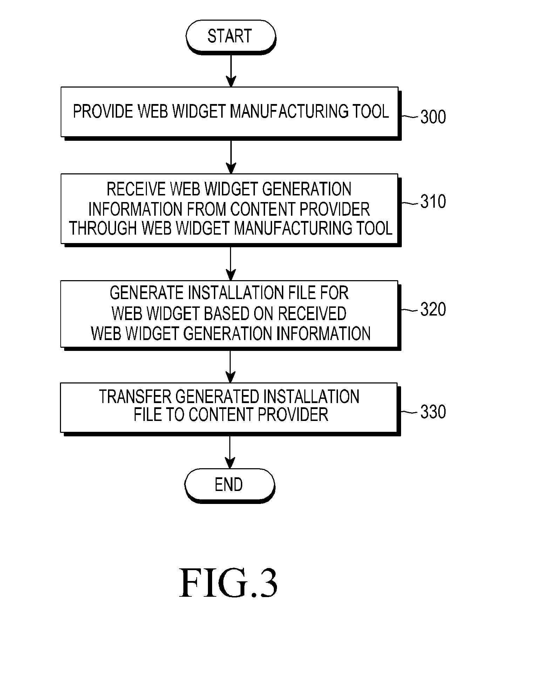

FIG. 3 is a flowchart illustrating a process in which a web widget manufacturing server device manufactures a web widget according to an exemplary embodiment of the present invention.

In operation 300, the web widget manufacturing unit 21 provides the web widget manufacturing tool to the content provider's device 10. For example, the web widget manufacturing unit 21 transfers the web page type of web widget manufacturing tool to the content provider's device 10, and the content provider's device 10 outputs the received web widget manufacturing tool on the screen.

In operation 310, the web widget manufacturing unit 21 receives the web widget generation information from the content provider's device 10 through the web widget manufacturing tool. The received web widget generation information is stored in the storage unit 24. The web widget manufacturing unit 21 may transfer the content preview data which may be output in the web widget frame to the content provider's device 10 in response to a request, or may transfer the content data corresponding to the selected content area to the content provider's device 10.

In operation 320, the web widget installation file generation unit 23 generates the installation file for the web widget based on the received web widget generation information, and transfers the installation file to the web widget manufacturing unit 21. For example, the generated installation file may correspond to an application program file, which may be installed in the device, such as an Application PacKage (APK) file.

In operation 330, the web widget manufacturing unit 21 provides the generated installation file to the content provider's device 10. In more detail, the web widget manufacturing unit 21 may transfer the installation file to the content provider's device 10 so that the content provider's device 10 may install the generated web widget. Moreover, the web widget manufacturing unit 21 may transfer the installation file to the content provider's device 10 so that the installation file is enabled to be transferred to the web widget provision server 30 providing the web widget. In addition, the web widget manufacturing unit 21 may directly transfer the generated web widget installation file to the web widget provision server 30.

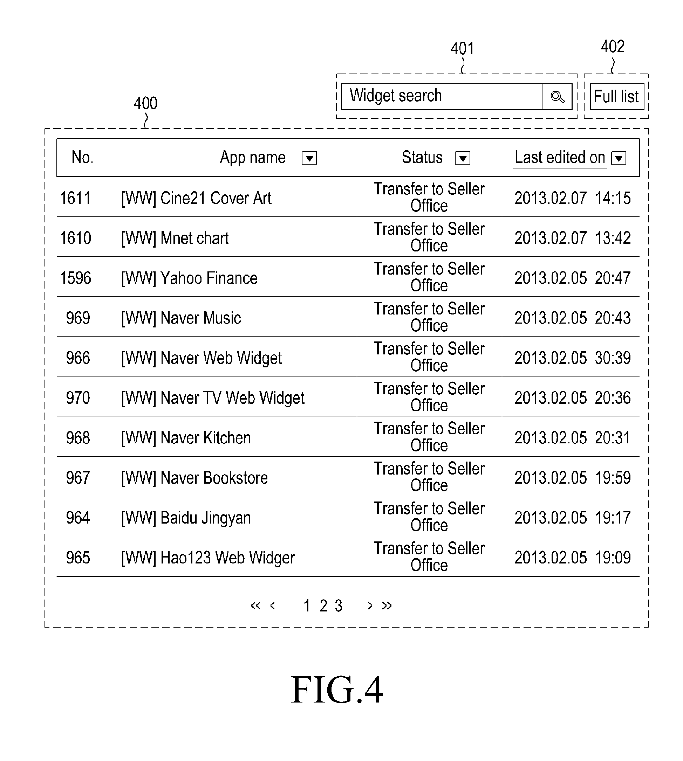

FIGS. 4, 5, 6, 7, 8A to 8E, 9, and 10 illustrate examples of a web page type of web widget manufacturing tool for manufacturing a web widget according to an exemplary embodiment of the present invention.

FIGS. 4, 5, 6, 7, 8A to 8E, 9, and 10 of the present technique illustrate that the web widget manufacturing tool received in the content provider's device 10 is displayed on the screen. The displayed screen of the web widget manufacturing tool is not limited to the exemplary embodiments described herein, and may be variously configured.

FIG. 4 illustrates an example of a screen including a web widget list area showing a list for web widgets generated by at least one content provider according to an exemplary embodiment of the present invention and a search area for searching for a desired web widget among the web widgets. The screen illustrated in FIG. 4 includes one or more web widget list areas 400, a search area 401 for searching for the web widget corresponding to a specific keyword, and a key area 402 for displaying a full web widget list.

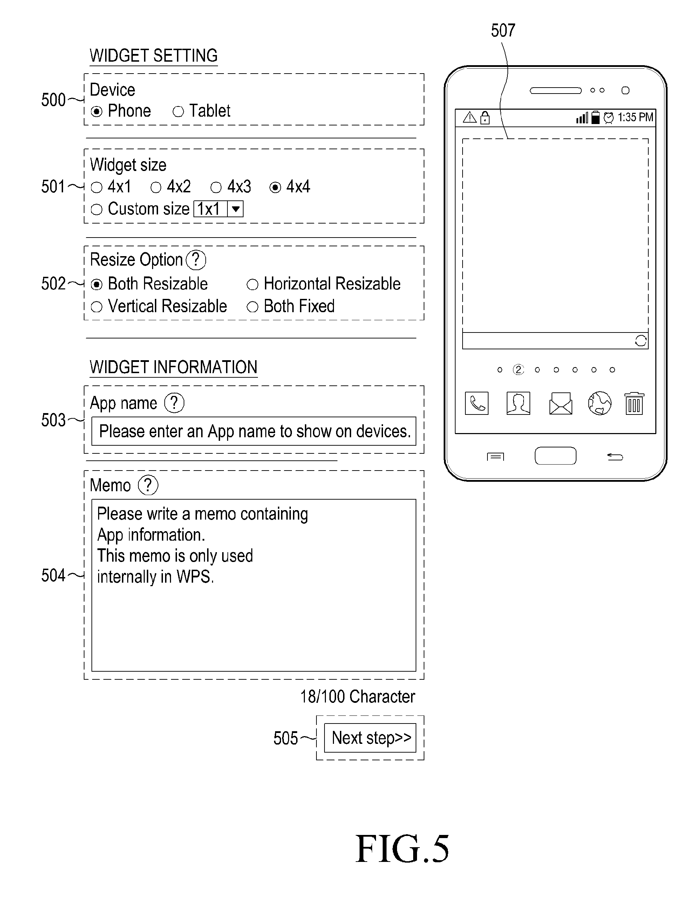

FIG. 5 illustrates an example of a screen configured to input a web widget frame configuration information and web widget additional information for manufacturing a web widget according to an exemplary embodiment of the present invention.

The screen illustrated in FIG. 5 includes an area 500 for setting a type of target device in which the web widget is installed, an area 501 for setting a frame size of the web widget, an area 502 for setting whether or not resizing for the set frame size is possible, an area 503 for setting a name of the web widget, an area 504 for inputting a description of the web widget, a key area 505 for displaying a next setup screen, and an area 507 for displaying a preview for the web widget being manufactured.

The web widget manufacturing unit 21 may allow selection of any one of a phone and a tablet in the area 500 for setting the type of target device in which the web widget is installed. Since the phone and the tablet have a different grid size on the screen, the size of the web widget disposed on the screen may be determined by the grid.

The web widget manufacturing unit 21 may allow setting of a basic size of the web widget in the area 501 for setting the frame size of the web widget. For example, the basic size of the web widget may be set to a size with a vertical length and a horizontal length such as 4x1, 4x2, 4x3, and 4x4 depending on a screen ratio, or may be set to a custom size within a size capable of being displayed on the screen. The frame size of the web widget described in the present disclosure is not limited to the above description, and may be set to various sizes.

The web widget manufacturing unit 21 may allow setting of whether or not the widget size is made resizable or fixed, in the area 502 for setting whether or not the resizing for the set frame size is possible. In particular, the web widget manufacturing unit 21 may allow setting of any one of both the horizontal length and the vertical length as being resizable (i.e., Both Resizable), only the horizontal length as being resizable (i.e., Horizontal Resizable), only the vertical length as being resizable (i.e., Vertical Resizable), and both the horizontal length and the vertical length as being fixed (i.e., Both Fixed), in the area 502 for setting whether or not the resizing for the set frame size is possible.

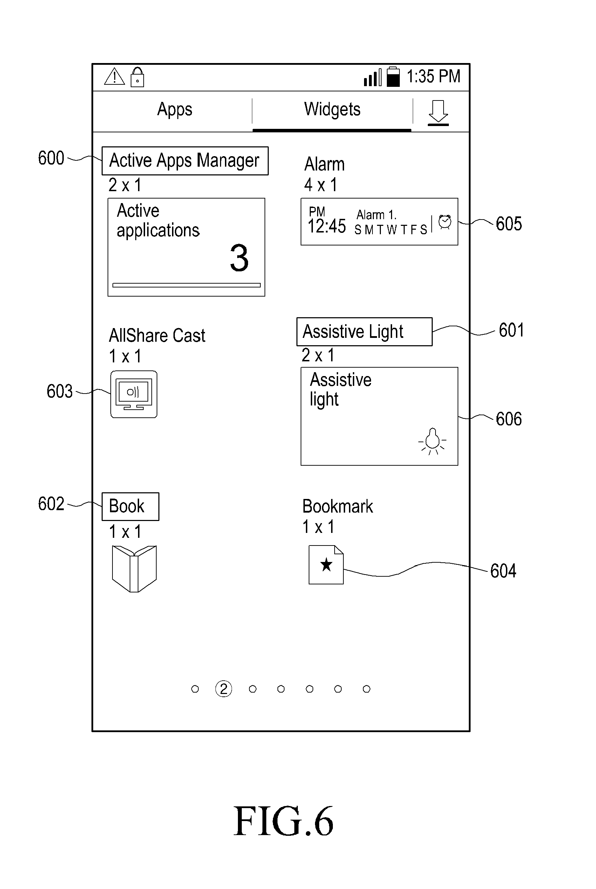

The web widget manufacturing unit 21 may allow setting of the name of the web widget, in the area 503 for setting the name of the web widget, and the set name of the web widget may be included in the web widget list. Moreover, the set name of the web widget may be displayed on the screen, as the part indicated by reference numerals 600, 601, and 602 of FIG. 6.

The web widget manufacturing unit 21 may allow inputting of a description of the web widget in the area 504 for inputting the description of the web widget.

When the key area 505 for displaying the next setup screen is selected, the web widget manufacturing unit 21 may allow displaying of a screen for other settings/options of the web widget, after settings/options for the above-described areas are completed. If the settings/options for each of the areas fail to be completed, the corresponding key area 505 may not be allowed to be activated.

In the web widget preview area 507 for displaying the preview data for the web widget being manufactured, the web widget manufacturing unit 21 outputs preview data for the web widget set in each of the areas such that the content manufacturer may perform the preview for the web widget desired to be manufactured.

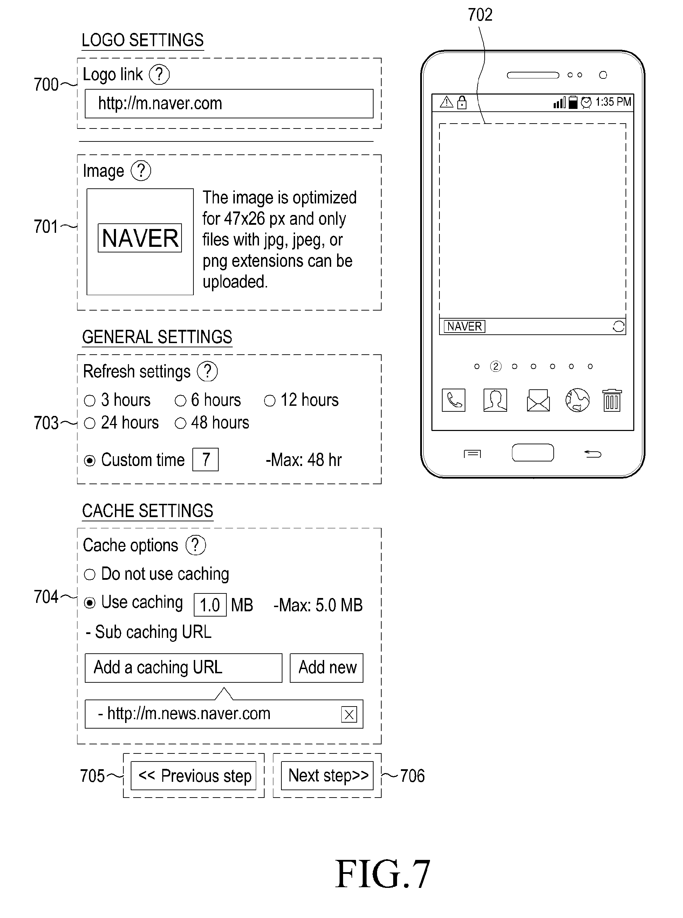

FIG. 7 illustrates an example of a screen configured to input a web widget frame configuration information and web widget setup information for manufacturing a web widget according to an exemplary embodiment of the present invention.

The screen 702 illustrated in FIG. 7 includes an area 700 for inputting a link of a logo image displayed on a status bar of the web widget, an area 701 for uploading the logo image displayed on the status bar of the web widget, an area 703 for setting a time period for content data renewal of the web widget, an area 704 for setting storage for cache data, a key area 705 for displaying a previous setup screen, and a key area 706 for displaying a next setup screen.

The web widget manufacturing unit 21 may allow inputting of a Uniform Resource Locater (URL) address of the web page which the content provider provides, in the area 700 for inputting the link of the logo image displayed on the status bar of the web widget. The URL address as described above may be used to output the web page corresponding to the logo image, when a selection input for the logo image displayed on the status bar of the web widget is performed.

The web widget manufacturing unit 21 may allow for registration of the logo image of the web page which the content provider provides, in the area 701 for uploading the logo image displayed on the status bar of the web widget. The registered logo image may be displayed on the status bar of the web widget in a predetermined size.

The web widget manufacturing unit 21 may allow setting of the time period, for renewing the content data of the web widget, such as 3 hrs, 6 hrs, 12 hrs, 24 hrs, and 48 hrs, in the area 703 for setting the time period for the content data renewal of the web widget. The time period may be enabled to be set to any time within a maximal setup time. In the present disclosure, since the content data which the web widget outputs corresponds to the web page, the renewal for the web widget has to be performed in order to renew the content data. For example, since the web widget for weather has to output the newest content data, the renewal for the corresponding web widget is necessary.

The web widget manufacturing unit 21 may set whether or not the cache data for the web page output in the web widget frame is stored, in the area 704 for setting the storage for the cache data. Moreover, when the cache data is stored in the area 704, the web widget manufacturing unit 21 may set a cache data storage capacity, and may set to store sub-cache data in addition to main cache data. For example, in a case where a main web page output in the web widget frame corresponds to "m.naver.com", when a sub-web page is set to "m.news.naver.com", the web widget manufacturing unit 21 may allow storing of the cache data for "m.naver.com" and the cache data for "m.news.naver.com" together. When the cache data is stored as described above, the device may output the main web page and the sub-web page in the web widget frame, even when a network is disconnected.

When the key area 705 for displaying the previous setup screen is selected, the web widget manufacturing unit 21 may allow for displaying of the setup screen shown in FIG. 5. When the key area 706 for displaying the next setup screen is selected, the web widget manufacturing unit 21 may allow for displaying of a screen for other setups of the web widget, after the setup for the above-described areas is completed.

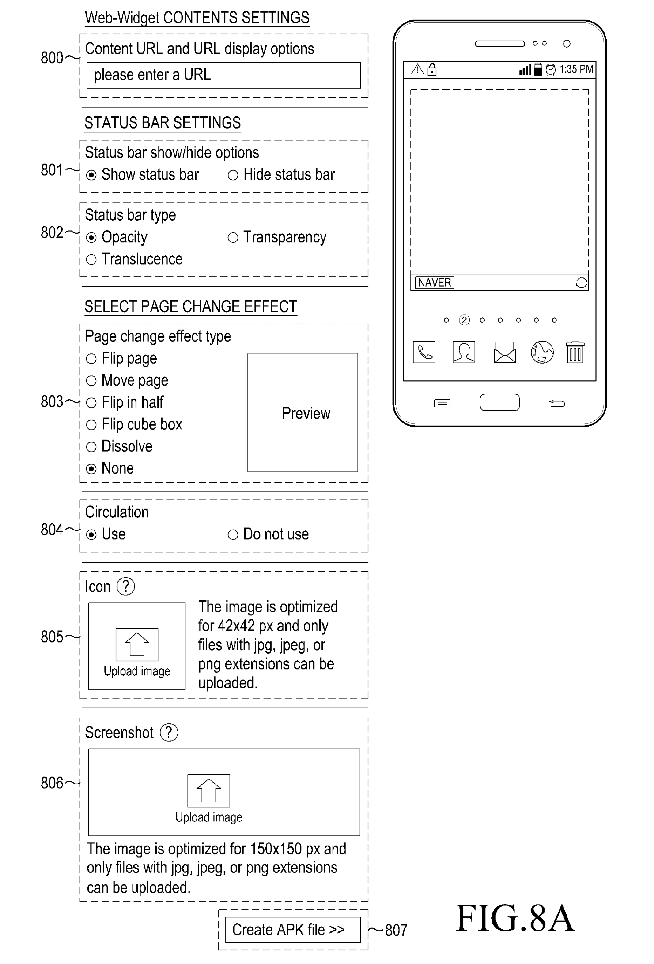

FIGS. 8A to 8E illustrate examples of a screen configured to input a web widget frame configuration information, a web widget content configuration information, and a web widget additional information for manufacturing a web widget according to exemplary embodiments of the present invention.

The screen illustrated in FIG. 8A includes an area 800 for inputting an address for the content data output in the web widget frame, an area 801 for setting a display for the status bar, an area 802 for setting a display type for the status bar, an area 803 for setting an effect type when the web page in the web widget frame is converted, an area 804 for setting to move from a last page to a first page of the web page and to display the first page of the web page, an area 805 for setting an icon image of the web widget, an area 806 for setting a screen shot of the web widget, a key area 807 for creating an APK file.

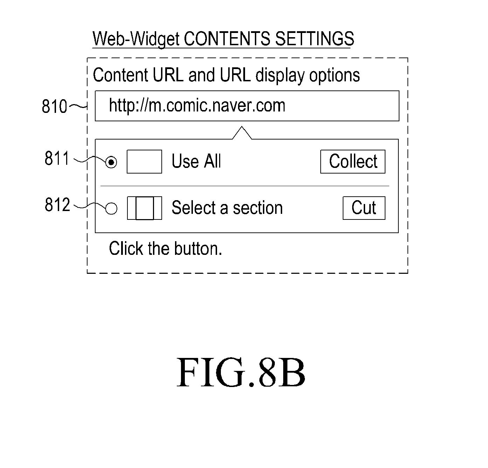

In the area 800 for inputting the address for the content data output in the web widget frame, the web widget manufacturing unit 21 may input an address for the web page output in the web widget frame such that a web page data corresponding to the address input in the web widget frame may be output. Hereinafter, a description regarding this will be given in more detail with reference to FIG. 8B.

FIG. 8B illustrates an example of a screen for setting a content area desired to be output in a web widget frame by means of an address input according to an exemplary embodiment of the present invention.

The screen illustrated in FIG. 8B includes a setup area 811 for setting to output the full web page corresponding to the input address, when the address for the web page output in the web widget frame is input in the part indicated by reference numeral 810, and a setup area 812 for setting to output the selected area of the web page corresponding to the input address.

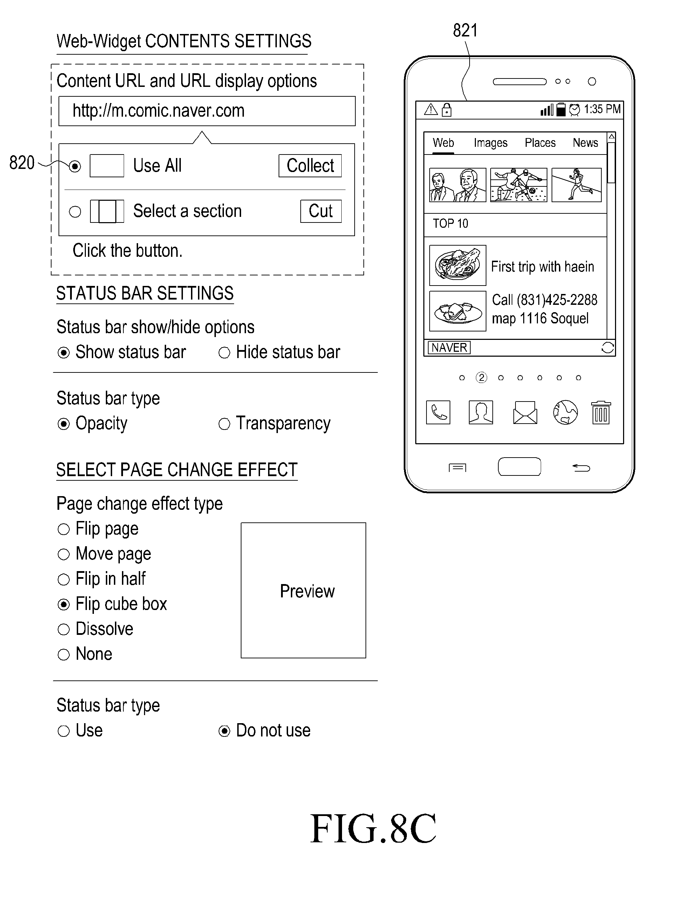

A case in which the full content data is set to be output, or the selected area of the web page is set to be output will be described with reference to FIGS. 8C to 8E.

FIG. 8C illustrates an example of a web widget preview area in a case in which a full web page is set to be output according to an exemplary embodiment of the present invention.

When the full web page is set to be output as the part indicated by reference numeral 820 of FIG. 8C, the web widget manufacturing unit 21 may allow outputting of the full content data in the web widget preview area 821. For example, when the web page address is set to "http://m.naver.com", the web widget manufacturing unit 21 may output the full main page of a Naver mobile website in the web widget preview area 821.

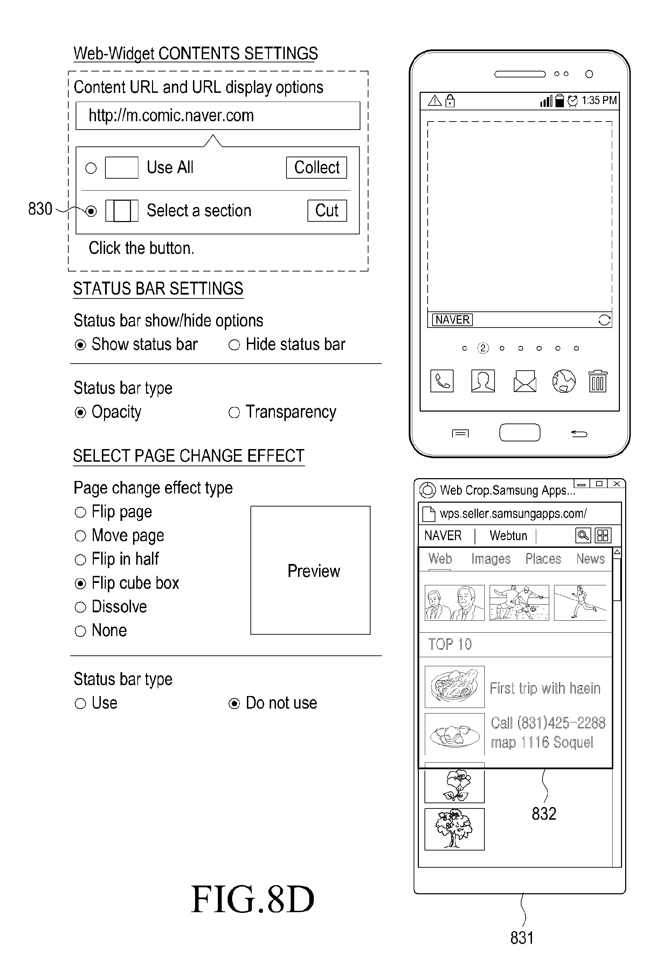

FIG. 8D illustrates an example of a web widget preview area in a case in which content data in a selected area is set to be output according to an exemplary embodiment of the present invention.

When an input for setting the content area, desired to be output in the web widget frame, of the full web page screen corresponding to the input address is performed as the part indicated by reference numeral 830 of FIG. 8D, the web widget manufacturing unit 21 outputs a preview screen 831 of the full web page which is capable of being set. At this time, the web widget manufacturing unit 21 transfers a request message, for requesting the preview screen of the full web page which is capable of being set, to the preview generation unit 22. The request message includes an address of the website which is set on the preview screen, a size of the preview screen, and a file name of the preview screen. The preview generation unit 22 receiving the request message generates the preview screen by using information included in the request message, and thereafter transfers the generated preview screen to the web widget manufacturing unit 21.

The web widget manufacturing unit 21 may display a selected content area 832 and an unselected area in the preview screen such that the selected content area 832 and the unselected area are distinguished from each other. Moreover, the web widget manufacturing unit 21 may also output the corresponding preview screen 831 by using a separate pop-up window.

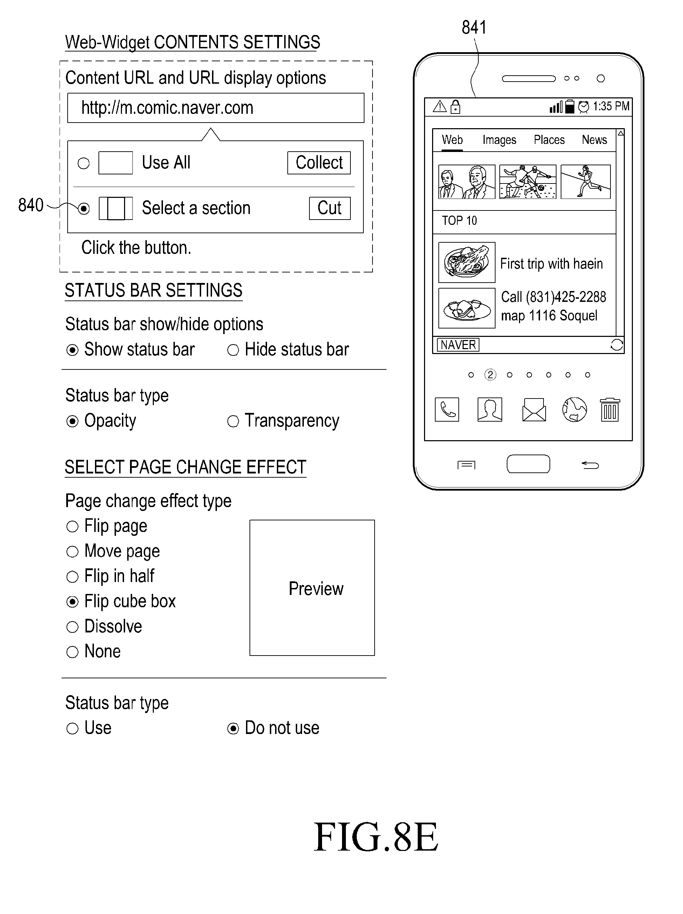

When selection of the content area 832 desired to be output is completed, the web widget manufacturing unit 21 outputs the web page screen corresponding to the selected content area in the web widget frame. In other words, the web widget manufacturing unit 21 outputs a web page screen 841 corresponding to the selected content area in response to the input for selecting the content area as the part indicated by reference numeral 840 of FIG. 8E.

The web widget manufacturing unit 21 may allow setting of whether or not the status bar is displayed, in the area 801 for setting the display for the status bar. When the status bar is not displayed, the web widget manufacturing unit 21 fails to display a key area for changing a web widget setup and a key area for requesting data renewal together.

The web widget manufacturing unit 21 may enable the display type of the status bar to be set, in the area 802 for setting the display type for the status bar. For example, the web widget manufacturing unit 21 may set the status bar to a state of opacity, translucency, or transparency.

When a size of a content screen desired to be displayed in the web widget is bigger than that of the web widget frame, the content screen may be set to be scrolled, and the web widget manufacturing unit 21 may allow setting of the effect type, in the area 803 for setting the effect type when the web page in the web widget frame is converted, when the web page is converted by the scroll. The web widget manufacturing unit 21 may set a size shown in one screen to one page in the web widget frame, and may allow outputting of the set effect while moving by the set page. For example, the effect type includes a flip page type having an effect that pages are flipped as pages of the calendar are turned, a move page type having an effect that pages are moved as paper is lifted and moved, a flip in half type having the same effect as page movement of a flip board, a flip cube box type having an effect that pages are moved as a 3 Dimensional (3D) cube rolls, a dissolve type having an effect that a current page and a next page are moved while fading in and out, and a none type where the effect type is not set. When the effect type is not set, the web widget manufacturing unit 21 may allow the type to be set as a scroll of a general web browser.

In the area 804 for setting to move from the last page to the first page of the web page and to display the first page of the web page, when movement from the last page to the next page is performed again, the web widget manufacturing unit 21 may allow setting of whether or not movement to the first page of the web widget is performed. The area 804 may be set in a case where the effect type is set in converting the web page, and when the area 804 is not used, the web widget manufacturing unit 21 may not allow further movement at the last page.

The web widget manufacturing unit 21 may allow setting of the icon image of the web widget, in the area 805 for setting the icon image of the web widget.

The web widget manufacturing unit 21 may allow setting of the screen shot of the web widget, in the area 806 for setting the screen shot of the web widget.

The icon image of the web widget set as described above may be shown as the part indicated by reference numeral 603 and 604 of FIG. 6, and the screen shot image of the set web widget may be shown as the part indicated by reference numeral 605 and 606 of FIG. 6.

When the key area 807 for generating the web widget installation file is selected, the web widget manufacturing unit 21 transfers the above-set information to the web widget installation file generation unit 23.

The web widget installation file generation unit 23 combines a web widget template prepared in advance with the received information to generate the web widget installation file, and transfers the generated web widget installation file to the web widget manufacturing unit 21. For example, the web widget installation file generation unit 23 combines a web widget APK template prepared in advance with the received information to generate a web widget APK file, and transfers the generated web widget APK file to the web widget manufacturing unit 21.

In more detail, the web widget manufacturing unit 21 includes the web widget generation information input through the web widget generation tool in the request message for requesting generation for the web widget installation file, and transfers the request message to the web widget installation file generation unit 23. An inherent sequence for managing the web widget, and an identifier for recognizing a peculiarity for each widget in the device are further included in the request message.

Moreover, the web widget installation file generation unit 23 transfers an acknowledgement message including the generated web widget APK binary to the web widget manufacturing unit 21 in response to such a request message. A location of the generated web widget APK file, a file name, and version information are included in the acknowledgement message.

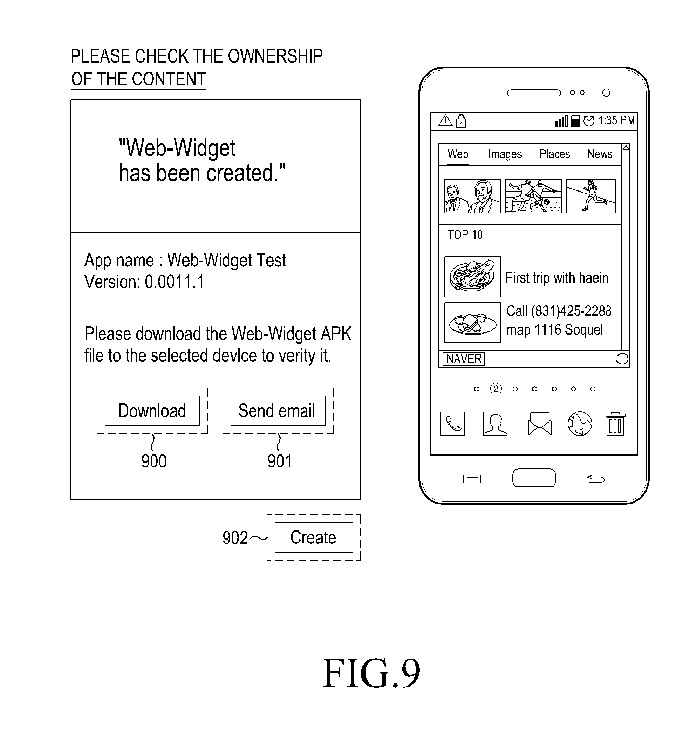

FIG. 9 illustrates an example of a screen for downloading an installation file for a generated web widget or transferring an installation file to a web widget provision server, according to an exemplary embodiment of the present invention.

The screen illustrated in FIG. 9 includes a key area 900 for downloading the generated web widget installation file, a key area 901 for transmitting the generated web widget installation file by e-mail, and a key area 902 for transferring the generated web widget installation file to the web widget provision server.

When the key area 900 for downloading the generated web widget installation file is selected, the web widget manufacturing unit 21 transfers the generated web widget installation file to the content provider's device.

When the key area 901 for transmitting the generated web widget installation file by e-mail is selected, the web widget manufacturing unit 21 transfers the generated web widget installation file to an e-mail address input by the content provider.

When the key area 902 for transferring the generated web widget installation file to the web widget provision server 30 is selected, the web widget manufacturing unit 21 transfers the generated web widget installation file to the web widget provision server 30.

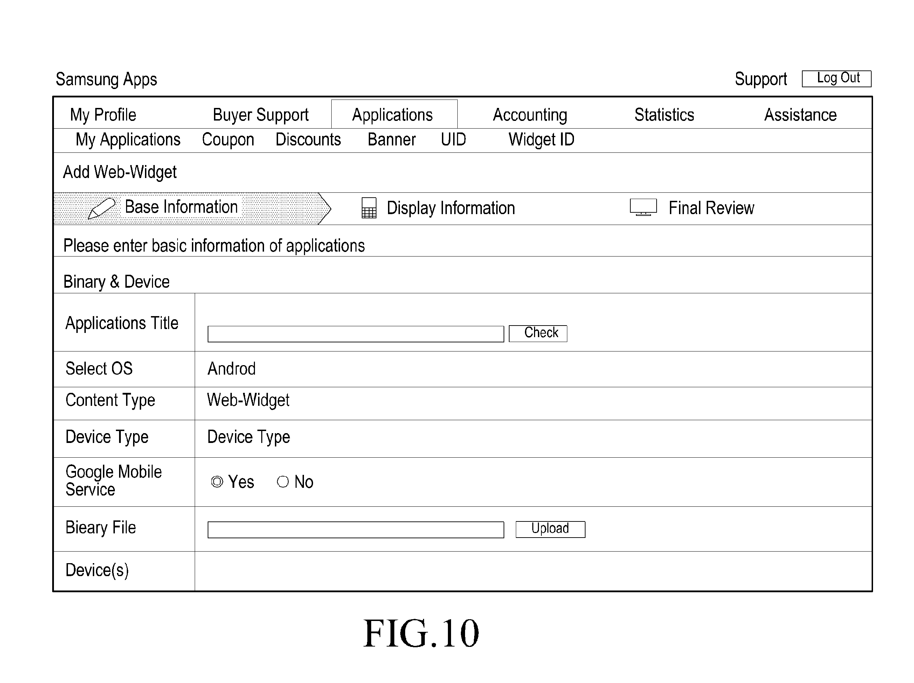

FIG. 10 illustrates an example of a setup screen for transferring a web widget installation file manufactured by a content provider to a web widget provision server according to an exemplary embodiment of the present invention.

Through the screen shown in FIG. 10, the content provider may register the web widget installation file, generated through the description screen for directly transferring to the web widget provision server 30, in an application market without separately performing an operation for connecting with the web widget provision server 30.

In the present technique, although it is described that the web widget manufacturing server 20 includes the web widget manufacturing unit 21, the preview generation unit 22, the web widget installation file generation unit 23, and the storage unit 24, the web widget manufacturing unit 21, the preview generation unit 22, the web widget installation file generation unit 23, and the storage unit 24 may be configured as separate devices.

Furthermore, in the present technique, although it is described that the preview generation unit 22 generates the preview screen, the web widget manufacturing unit 21 may also perform a corresponding operation without the preview generation unit 22, according to an another exemplary embodiment of the present invention.

In this way, since the content provider easily and rapidly develops the web widget without a separate developer or planner, or use of a complicated client development tool, the present technique can secure a plurality of web widgets, which are favorable to distributing a service of the content provider and are easily developed, to enhance accessibility to the widget content which users use often, thereby providing convenience.

It can be seen that the exemplary embodiments of the present invention are realized in a form of hardware or a combination of hardware and software. The arbitrary software can be stored in, for example, irrespective of being erasable or rewritable, a volatile storage device, a non-volatile storage device such as a Read-Only Memory (ROM), a memory such as a Random-Access Memory (RAM), a memory chip device, and an integrated circuit, an optically or magnetically recordable and machine (for example, a computer) readable storage medium such as a Compact Disc (CD), a Digital Versatile Disc (DVD), a magnetic disk, and a magnetic tape. A web widget manufacturing method of the present technique can be realized by a computer or a portable terminal including a controller and a memory, and it can be seen that the memory corresponds to an example of the storage medium which is suitable for storing a program or programs including instructions by which the exemplary embodiments of the present invention are realized, and is machine readable. Accordingly, the present technique includes a program which includes a code for realizing an apparatus and a method described in arbitrary claims of the present specification, and a storage medium which stores such a program as described above and is machine (computer) readable. Moreover, such a program as described above can be electronically transferred through an arbitrary medium such as a communication signal transferred through cable or wireless connection, and the present technique includes the things equivalent to that

Moreover, the web widget manufacturing device can receive the program from a program provision device which is connected thereto in a cable or wireless manner, and store the program. The program provision device may include a program including instructions by which the web widget manufacturing device performs a predetermined content protection method, a memory for storing information necessary for the content protection method, a communication unit for performing cable or wireless communication with the web widget manufacturing device, and a controller transferring a corresponding program to the web widget manufacturing device in response to a request of the web widget manufacturing device or automatically.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. An apparatus (20) for manufacturing a web widget, the apparatus comprising:
a web widget manufacturing unit (21) configured to provide (300), to a content provider's device (10), a web widget manufacturing tool for manufacturing the web widget and to receive (310) web widget generation information used for manufacturing the web widget from the content provider's device; and
a web widget installation file generation unit (23) configured to generate (320) an installation file for the web widget based on the web widget generation information,
wherein the apparatus is configured to transfer (330) the generated installation file for the web widget to the content provider's device.

2. The apparatus (20) of claim 1, wherein the web widget generation information comprises web widget frame configuration information, web widget setup information, web widget additional information, and web widget content configuration information.

3. The apparatus (20) of claim 2, wherein the web widget manufacturing tool is configured in a web page form, and comprises an input page for inputting the web widget frame configuration information, the web widget setup information, the web widget additional information, and the web widget content configuration information.

4. The apparatus (20) of claim 2 or 3, wherein the web widget frame configuration information comprises at least one of a type of device on which the web widget is desired to be installed, a frame size of the web widget, information for setting a variation of the frame size, a web widget name, information for setting display of a status bar of the web widget, a logo image displayed on the status bar of the web widget, and link information corresponding to the logo image.

5. The apparatus (20) of any one of claims 2-4, wherein the web widget setup information comprises at least one of information for setting a web page renewal request for the web widget, and information for setting storage of cache data of the web widget.

6. The apparatus (20) of any one of claims 2-5, wherein the web widget additional information comprises at least one of an icon for the web widget, and a screenshot for the web widget.

7. The apparatus (20) of any one of claims 2-6, wherein the web widget content configuration information comprises at least one of an address for a content output in a frame of the web widget, setup information for a content display area, and information for setting an effect during a page conversion.

8. The apparatus (20) of claim 1, further comprising:
a preview generation unit (22) configured to generate a preview screen for a content output in a frame of the web widget,
wherein, when address information for the content output in the frame of the web widget is received from the content provider's device, the web widget manufacturing unit (21) is configured to request the preview screen for the content corresponding to the received address information from the preview generation unit, and to transfer the preview screen, received from the preview generation unit, for the content corresponding to the received address information to the content provider's device.

9. The apparatus (20) of claim 8, wherein, when selection for an area corresponding to a size set in advance on the preview screen is received, the web widget manufacturing unit (21) outputs a content corresponding to the selected area in the frame of the web widget.

10. A method of manufacturing a web widget, the method comprising:
providing (300) a web widget manufacturing tool for manufacturing the web widget to a content provider's device;
receiving (310) web widget generation information used for manufacturing the web widget from the content provider's device;
generating (320) an installation file for the web widget based on the web widget generation information; and
transferring (330) the generated installation file for the web widget to the content provider's device.

11. The method of claim 10, wherein the web widget generation information comprises web widget frame configuration information, web widget setup information, web widget additional information, and web widget content configuration information.

12. The method of claim 11, wherein the web widget manufacturing tool is configured in a web page form, and comprises an input page for inputting the web widget frame configuration information, the web widget setup information, the web widget additional information, and the web widget content configuration information.

13. The method of claim 11, wherein the web widget frame configuration information comprises at least one of a type of device on which the web widget is desired to be installed, a frame size of the web widget, information for setting a variation of the frame size, a web widget name, information for setting display of a status bar of the web widget, a logo image displayed on the status bar of the web widget, and link information corresponding to the logo image.

14. The method of claim 10, wherein providing the web widget manufacturing tool for manufacturing the web widget to the content provider's device comprises:
receiving address information for the content output in the frame of the web widget from the content provider's device;
generating the preview screen for the content corresponding to the received address information; and
transferring the generated preview screen to the content provider's device.

15. The method of claim 14, further comprising, when selection for an area corresponding to a size set in advance on the preview screen is received,
outputting a content corresponding to the selected area in the frame of the web widget.

16. Computer program product comprising computer instructions which, when executed on a processor of an apparatus (20), such as a server, cause said server as an apparatus according to any one of claims 1-9.
